# EUROPEAN PATENT APPLICATION

(11) **EP 4 775 344 A1**
(43) Date of publication of application: **15.07.2026**
(21) Application number: 26150924.4
(22) Date of filing: 09.01.2026
(51) Int. Cl.: B23K 26/03, B23K 26/064, B23K 26/082, G02B 5/09, G02B 26/10, G02B 26/12

(54) **LASER PROCESSING APPARATUS AND METHOD OF CONTROLLING THE SAME**

(30) Priority: 10.01.2025 KR 20250004073
(71) Applicant: Philenergy Co., Ltd, Osan-si Gyeonggi-do 18102 (KR)
(72) Inventor: KIM, Dong Woo, 18102 Gyeonggi-do (KR); SEO, Won Jin, 18102 Gyeonggi-do (KR); KANG, Dae Won, 18102 Gyeonggi-do (KR); YUN, Jae Wook, 18102 Gyeonggi-do (KR)
(74) Representative: Michalski Hüttermann & Partner mbB

(57) **Abstract**

The present invention relates to a laser processing apparatus which includes a laser module configured to generate a laser beam, a mirror configured to reflect the laser beam toward a polygon scanner, and a processor configured to measure an error in a processing line formed on a target workpiece by the laser beam and, based on the error in the processing line, perform at least one of angle correction of the mirror and laser emission timing correction of the laser module.

## Description

### BACKGROUND

### 1. Field of the Invention

The present invention relates to a laser processing apparatus which can correct distortion of laser beam reflected from a mirror by adjusting an incident angle of the laser beam or the timing of emission of the laser beam in response to an error of each mirror when the laser beam is emitted onto the mirrors formed on each surface of a polygon scanner, and a method of controlling the same.

### 2. Discussion of Related Art

A laser is used in cutting processes, pattern forming processes, or the like for precise processing of display devices or secondary battery devices.

The background technology of the present invention is disclosed in Korean Registration Patent No. 10-0799500 (January 24, 2008).

The background technology discloses a laser dry etching device configured to form a pattern by removing a portion of a film formed on a substrate or glass using a laser beam and a polygonal scanner and a galvanometer scanner for controlling a path of the laser beam.

In order to guide light to the polygon scanner, the galvanometer scanner includes a mirror unit that is rotatably mounted and reflects light generated by a light source, a driving unit for supporting and rotating the mirror unit, and a total reflection mirror for changing a vertical path of the light generated by the light source.

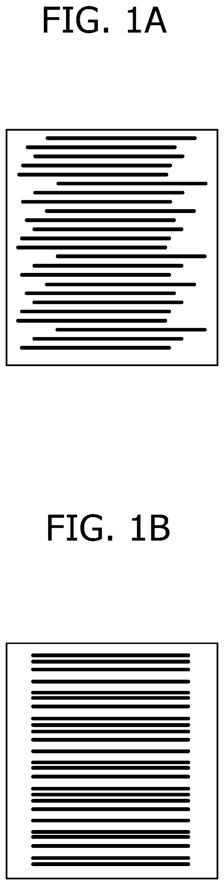

The laser processing apparatus has a problem that, since the laser beam emitted onto a target workpiece is distorted (i.e., an emission path is bent or an emission interval is inconsistent) due to errors in the mirrors formed on each surface of the polygon scanner (e.g., a horizontal angular error, a vertical angular error, and the like), as illustrated in FIGS. 1A to 1C, a consistent straight line pattern is not formed on the target workpiece, but defective patterns are formed.

However, the laser processing apparatus in the background technology does not provide a method of correcting a defective pattern to a normal pattern when the defective pattern occurs.

### SUMMARY OF THE INVENTION

One aspect of the present invention is directed to providing a laser processing apparatus which may correct distortion of a laser beam reflected from a mirror by adjusting an incident angle of the laser beam or the timing of emission of the laser beam in response to an error of each mirror when the laser beam is emitted onto the mirrors formed on each surface of a polygon scanner, and a method of controlling the same.

According to one aspect of the present invention, there is provided a laser processing apparatus including a laser module configured to generate a laser beam, a mirror configured to reflect the laser beam toward a polygon scanner, and a processor configured to measure an error in a processing line formed on a target workpiece by the laser beam and, based on the error in the processing line, perform at least one of angle correction of the mirror and laser emission timing correction of the laser module.

The mirror may be a total reflection mirror.

The laser processing apparatus may further include a camera configured to capture an image of a surface of the target workpiece and transmit the image to the processor in order that the processor measures the error in the processing line.

The processor may analyze a plurality of processing lines formed on a surface of the target workpiece photographed by a camera and measure at least one of an error in a spacing between the processing lines, an error in start/end points of the processing line, and a bow aberration of the processing line.

The processor may select a processing line with a smallest bow aberration among the plurality of processing lines formed on the surface of the target workpiece and set the selected processing line to a reference line, and compare the reference line with other processing lines to measure at least one of the error in the start/end points of the processing line, the error in the spacing between the processing lines, and the bow aberration of the processing line.

The processor may be implemented to calculate an angular error of each mirror formed in the polygon scanner based on an error in start/end points of the processing line, an error in a spacing between processing lines, and a bow aberration of the processing line.

When the error in the start/end points of the processing line is measured, the processor may correct the errors in the start/end points of each processing line through the laser emission timing correction of the laser module.

When the error in the spacing between the processing lines and the bow aberration of the processing line are measured, the processor may correct the error in the spacing between the processing lines and the bow aberration of the processing line by adjusting an angle of the mirror.

The processor may calculate a correction value for correcting errors in processing lines that occur on the target workpiece due to an angular error of each mirror formed in the polygon scanner using experimental result data or a designated mathematical equation.

According to another aspect of the present invention, there is provided a method of controlling a laser processing apparatus, which includes measuring, by a processor of a laser processing apparatus, an error in a processing line formed on a target workpiece by a laser beam, and performing, by the processor, at least one of angle correction of a mirror and laser emission timing correction of a laser module based on the error in the processing line.

The mirror may be a total reflection mirror.

The method may further include capturing, by a camera, an image of a surface of the target workpiece and transmitting the image to the processor in order that the processor measures the error in the processing line.

The processor may analyze a plurality of processing lines formed on a surface of the target workpiece photographed by a camera and measure at least one of an error in a spacing between the processing lines, an error in start/end points of the processing line, and a bow aberration of the processing line.

In the measuring of the error in the processing line, the processor may select a processing line with a smallest bow aberration among the plurality of processing lines formed on the surface of the target workpiece and set the selected processing line to a reference line, and compare the reference line with other processing lines to measure at least one of the error in the start/end points of the processing line, the error in the spacing between the processing lines, and the bow aberration of the processing line.

Before the performing of the at least one of the angle correction of the mirror and the laser emission timing correction of the laser module, the processor may calculate an angular error of each mirror formed in a polygon scanner based on an error in start/end points of the processing line, an error in a spacing between processing lines, and a bow aberration of the processing line.

When the error in the start/end points of the processing line is measured, the processor may correct the errors in the start/end points of each processing line through the laser emission timing correction of the laser module.

When the error in the spacing between the processing lines and the bow aberration of the processing line are measured, the processor may correct the error in the spacing between the processing lines and the bow aberration of the processing line by adjusting an angle of the mirror.

The processor may calculate a correction value for correcting errors in processing lines that occur on the target workpiece due to an angular error of each mirror formed in a polygon scanner using experimental result data or a designated mathematical equation.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIGS. 1A to 1C are exemplary views illustrating a defective pattern formed on a target workpiece due to distortion of a laser beam emitted onto the target workpiece due to errors in mirrors formed on each surface of a polygon scanner in a laser processing apparatus;
FIG. 2 is an exemplary view illustrating a schematic configuration of a laser processing apparatus according to one embodiment of the present invention;
FIG. 3 is a flowchart for describing a method of controlling a laser processing apparatus according to one embodiment of the present invention;
FIGS. 4A and 4B are exemplary views for describing angular errors of mirrors that may occur in mirrors formed in a polygon scanner of the laser processing apparatus;
FIGS. 5A and 5B are exemplary views illustrating errors that occur in a processing line of a target workpiece due to an angular error in the mirror formed in the polygon scanner of FIGS. 4A and 4B; and
FIG. 6 is an exemplary view illustrating a method of correcting distortion of a laser beam by adjusting the laser emission timing and an angle of the mirror depending on the type of error measured from the target workpiece.

### DETAILED DESCRIPTION OF EXEMPLARY EMBODIMENTS

Hereinafter, a laser processing apparatus and a method of controlling the same according to one embodiment of the present invention will be described with reference to the accompanying drawings.

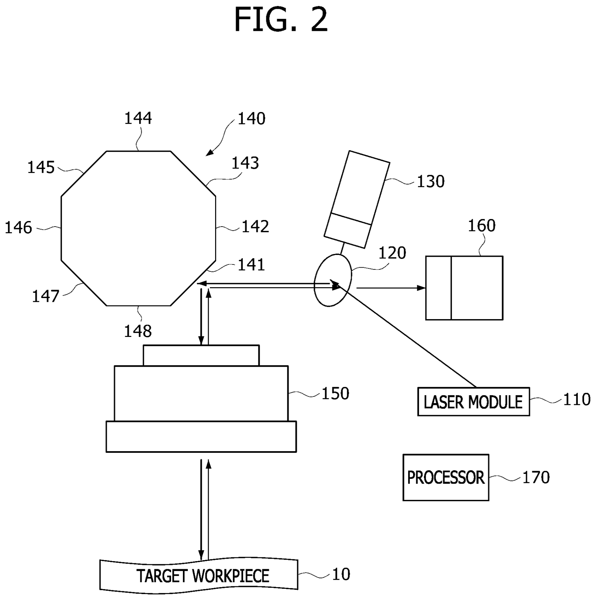

FIG. 2 is an exemplary view illustrating a schematic configuration of a laser processing apparatus according to one embodiment of the present invention.

Referring to FIG. 2, a laser processing apparatus according to the present embodiment includes a laser module 110, a total reflection mirror 120, a total reflection mirror driving module 130, a polygon scanner 140, a lens 150, a camera 160, and a processor 170. In the present embodiment, an example using a total reflection mirror 120 is described, but the present embodiment is not limited thereto, and various types of known or unknown mirrors that can achieve the same or equivalent level of performance may be applied within the scope of the present embodiment. Hereinafter, an example using a total reflection mirror will be described.

The laser module 110 is a light source for generating a laser beam.

The laser module 110 conceptually includes a driver for controlling the intensity of a laser beam and a driving unit for electrically controlling a direction in which the laser beam is emitted.

The total reflection mirror 120 reflects the laser beam emitted by the laser module 110 toward the polygon scanner 140.

The polygon scanner 140 has reflection surfaces formed by a plurality of mirrors 141 to 148 that are installed at equal intervals along an outer surface thereof and reflect a laser beam.

For example, the polygon scanner 140 may have a polygonal (e.g., octagonal) outer surface. However, the outer surface of the polygon scanner 140 is not limited to the polygonal shape.

The polygon scanner 140 is rotated at a specified speed and in a specified direction by a motor (not illustrated) and adjusts an angle at which the laser beam emitted by the laser module 110 is reflected according to a change in an angle of a reflective surface due to the rotation, thereby forming a linear pattern on a target workpiece 10.

The lens 150 guides laser beams reflected from the mirrors 141 to 148 formed on the outer surface of the polygon scanner 140 toward the target workpiece 10 and forms an image so that the laser beam scanned in a specified direction is focused on the target workpiece 10.

For example, the lens 150 may be implemented as a plurality of lenses with different characteristics to generate a path of the laser beam.

For reference, the target workpiece 10 may be transferred at a specified speed while mounted on a conveyor belt (not illustrated) or the like, and movement/stop and speed may be adjusted in synchronization with the laser processing process.

The camera 160 captures an image of a surface of the target workpiece 10.

The camera 160 captures an image of a pattern formed on the surface of the target workpiece 10, which is visible through the mirrors 141 to 148 formed in the polygon scanner 140 and the lens 150, through the total reflection mirror 120.

In this case, the camera 160 is preferably positioned perpendicular to the target workpiece 10 (i.e., in a direction that is the same as a direction in which the laser beam is emitted) to precisely analyze a processing line error. However, an installation position of the camera 160 is not limited, and according to the embodiment, the camera 160 may be installed at another position that allows the image of the surface of the target workpiece 10 to be captured.

The processor 170 may control the emission timing of the laser module 110. That is, the on/off timing of the laser module 110 may be controlled.

The processor 170 may control the total reflection mirror driving module 130 to adjust a reflection angle of the total reflection mirror 120. In this case, the reflection angle of the total reflection mirror 120 may be adjusted in all directions, that is, upward, downward, leftward, and rightward directions.

The processor 170 may control a rotational speed and rotational direction of the polygon scanner 140.

The processor 170 may analyze the processing lines (e.g., straight line patterns) formed on the surface of the target workpiece 10 photographed by the camera 160 to measure a spacing between processing lines, start/end points of the processing lines, and bow aberrations of the processing lines.

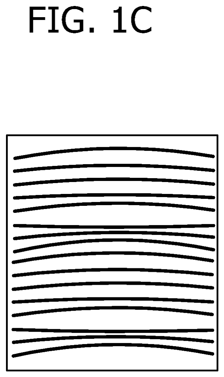

Here, the aberration refers to a phenomenon in which, when light emitted through a single point forms an image through a lens or mirror, the light beams do not completely converge at a single point, but the image becomes blurred, distorted, or bent, and as illustrated in FIG. 1C, this corresponds to an error that forms a pattern bent in a bow shape, and in the present embodiment, for convenience, the aberration may be referred to as a bow error.

The processor 170 may analyze the processing lines (e.g., straight line patterns) formed on the surface of the target workpiece 10 photographed by the camera 160 to select the processing line with the smallest bow aberration (or bow error) among the plurality of processing lines and set the selected processing line to a reference line.

The processor 170 may compare the reference line (i.e., the processing line set as the reference line) with other processing lines to measure errors in start/end points of the processing lines (see FIG. 1A), errors in the spacings between the processing lines (see FIG. 1B), and bow aberrations of the processing lines (see FIG. 1C).

The processor 170 may calculate the angular errors of the mirrors 141 to 148 formed in the polygon scanner 140 based on the errors in the start/end points of the processing lines, the error in the spacing between the processing lines, and the bow aberrations of the processing lines.

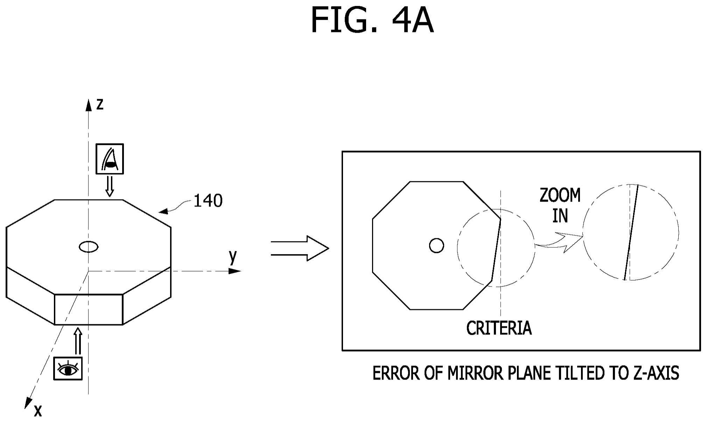

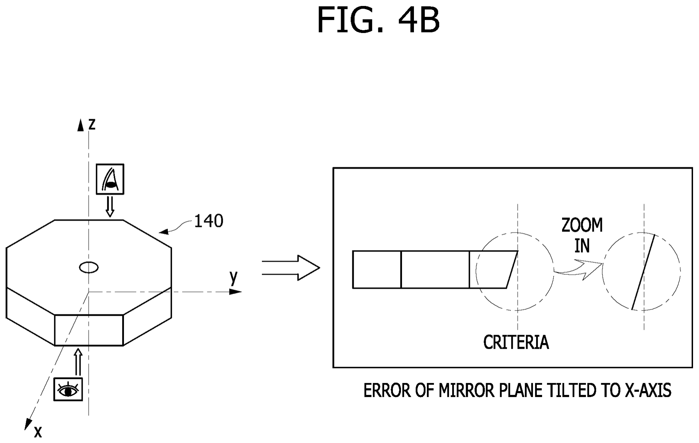

For example, the angular errors of the mirrors 141 to 148 formed in the polygon scanner 140, which may be calculated based on the errors in the start/end points of the processing lines, the error in the spacing between the processing lines, and the bow aberrations of the processing lines (see FIGS. 4A and 4B), may be calculated through experimental result data obtained through experiments and may also be calculated using a predetermined mathematical equation.

For example, the angular errors of the mirrors 141 to 148 formed in the polygon scanner 140 includes an angular error of the mirror surface tilted toward a z-axis when viewed along the xy plane as illustrated in FIG. 4A, and an angular error of the mirror surface tilted toward an x-axis when viewed along the yz plane as illustrated in FIG. 4B.

As illustrated in FIGS. 4A and 4B, due to the angular errors of the mirrors 141 to 148 formed in the polygon scanner 140, the errors in the start/end points between the processing lines, the error in the spacings between the processing lines, and the bow aberration of processing line occur as illustrated in FIG. 1A, 1B, and 1C.

The processor 170 may calculate the angular errors of the mirrors 141 to 148 formed in the polygon scanner 140 and calculate correction angles of the total reflection mirror 120 for correcting the angular errors of the mirror 141 to 148.

Based on the errors in the start/end points between the processing lines, the processor 170 may calculate the mirror errors corresponding to the errors in the start/end points of each processing line.

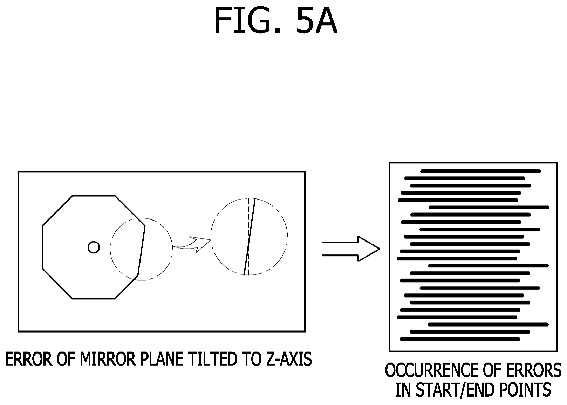

For example, since the errors in the start/end points of each processing line occur when there is an angular error of the mirror surface tilted toward the z-axis when viewed along the xy plane of the polygon scanner 140 as illustrated in FIG. 4A and FIG. 5A, a difference occurs in the start/end points of the processing lines formed on the surface of the target workpiece, and thus the angular error of the mirror surface of the polygon scanner 140 tilted toward the z-axis may be calculated in response to the errors in the start/end points of the processing lines.

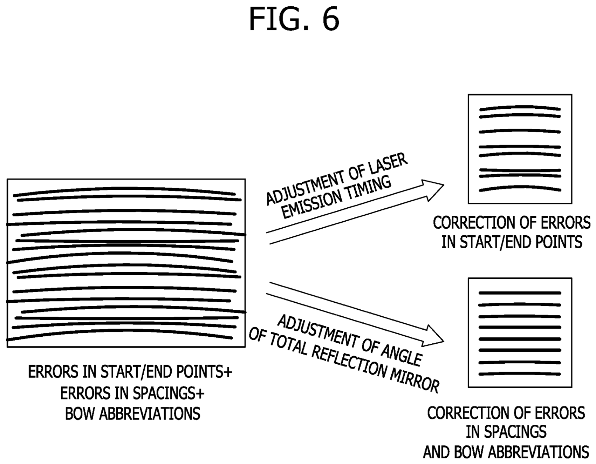

When the angular error of the mirror surface of the polygon scanner 140 tilted toward the z-axis in response to the errors in the start/end points of the processing line is calculated (see FIG. 5A), the processor 170 may correct the errors in the start/end points of each processing line by adjusting the laser emission timing (see FIG. 6). In addition, the total reflection mirror 120 may be rotated about a vertical axis (e.g., the x-axis) to compensate for the error in the spacing between the processing lines, and in addition, in another embodiment, the total reflection mirror 120 may be rotated about a horizontal axis (e.g., the z-axis) as well as the vertical axis to compensate for the errors in the start/end points.

In addition, the processor 170 may compensate for the error in the spacing between the processing lines and the bow aberrations of the processing lines by adjusting the angle of the total reflection mirror 120 (see FIG. 6).

In this case, the correction angle of the total reflection mirror 120 and laser emission timing correction values for compensating for the angular errors of the mirrors 141 to 148 formed in the polygon scanner 140, which may be calculated based on the errors in the start/end points of the processing lines, the error in the spacing between the processing lines, and the bow aberrations of the processing lines, may be calculated using experimental result data obtained through experiments or calculated using a pre-designated mathematical equation. The correction angle of the total reflection mirror 120 and the laser emission timing correction value calculated in this way may be stored in a memory (not illustrated) in the form of a lookup table.

The processor 170 may adjust the angle of the total reflection mirror 120 and the laser emission timing based on the correction angle information of the total reflection mirror 120 and the laser emission timing correction value for each mirror 141 to 148 of the polygon scanner 140, which are stored in the memory (not illustrated), when processing the target workpiece.

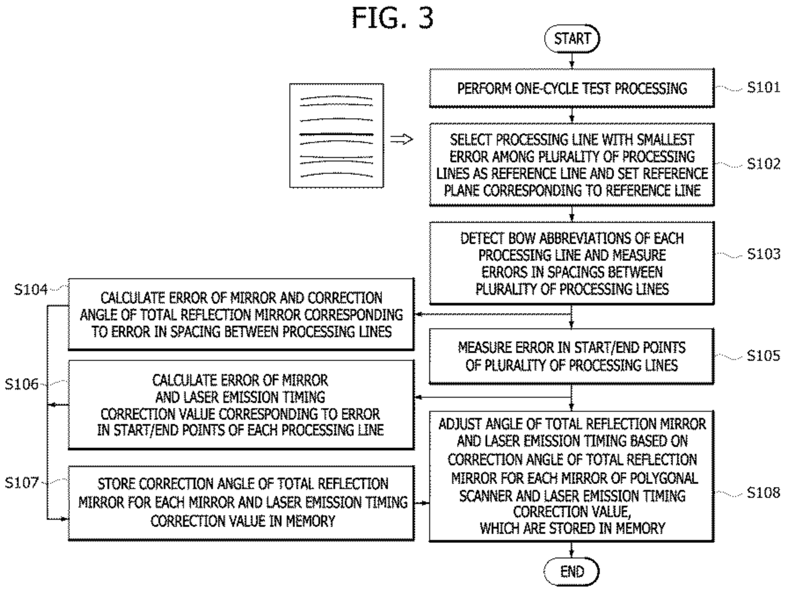

FIG. 3 is a flowchart for describing a method of controlling a laser processing apparatus according to one embodiment of the present invention.

Referring to FIG. 3, the processor 170 drives the laser processing apparatus to perform one-cycle test processing (S101).

Here, the term "one-cycle test processing" is test processing for measuring the errors in the start/end points of the processing lines, the error in the spacings between the processing lines, and the bow aberrations of the processing lines, which occur due to the angular errors of the mirrors 141 to 148 formed on the outer surface of the polygon scanner 140. The processor 170 performs the test processing a number of times corresponding to the number of mirrors formed on the outer surface of the polygon scanner 140.

When a plurality of processing lines are formed on the target workpiece 10 through the test processing, the processor 170 selects one of the plurality of processing lines as a reference line and sets a reference plane (i.e., a reflection plane on which a reference mirror is formed) corresponding to the reference line (S102).

In this case, it is preferable to select the reference line with the smallest error (e.g., errors in the start/end points, the error in the spacings between the processing lines, and the bow aberrations of the processing lines).

When the reference plane corresponding to the reference line (i.e., the reflection plane on which the reference mirror is formed) is set, a reflection plane number (or a mirror number) may be sequentially set according to the rotational direction of the polygon scanner 140.

As the reflection plane number (or the mirror number) is set in this way, a correction value (e.g., a correction angle of the total reflection mirror 120 and a laser emission timing correction value) for correcting errors (e.g., errors in the start/end points, the error in the spacings between processing lines, and the bow aberrations of processing lines) measured (or detected) through subsequent test processing may be stored in the memory (not illustrated) in the form of a lookup table corresponding to each reflection plane number (or the mirror number).

As the test processing is performed, the processor 170 stores the bow aberrations and processing values of each processing line (S103).

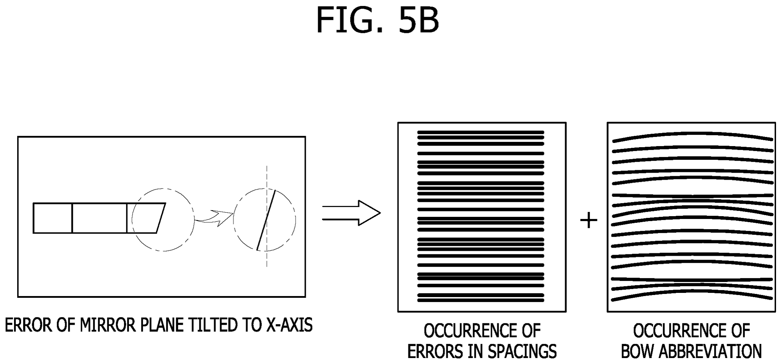

As illustrated in FIG. 5B, the bow aberrations of each processing line and the error in the spacings between the processing lines occur due to the same cause (i.e., the angular error of the mirror surface tilted toward the x-axis when viewed along the yz plane).

Accordingly, based on the error in the spacings between the processing lines and the bow aberrations of the processing lines, the processor 170 calculates the correction angle of the total reflection mirror 120 corresponding to the angular errors of the mirrors 141 to 148 formed in the polygon scanner 140 (S104) and stores the calculated correction angle in the memory (not illustrated) (S107).

In this case, the correction angle of the total reflection mirror 120 corresponding to the angular errors of the mirrors 141 to 148) may be calculated using experimental result data or a pre-designated mathematical equation.

In addition, the processor 170 measures the errors in the start/end points of the processing lines (S105).

As illustrated in FIG. 5A, the errors in the start/end points of the processing lines occur due to the angular error of the mirror surface tilted toward the z-axis when viewed along the xy plane.

Accordingly, based on the errors in the start/end points of the processing lines, the processor 170 calculates the laser emission timing correction values corresponding to the angular errors of the mirrors 141 to 148 formed in the polygon scanner 140 (S106) and stores the calculated laser emission timing correction values in the memory (not illustrated) (S107).

In this case, the laser emission timing correction values corresponding to the angular errors of the mirrors 141 to 148 may be calculated through experimentation or using a pre-designated mathematical equation.

Through such test processing, the processor 170 calculates correction values (e.g., the correction angle of the total reflection mirror 120 and the laser emission timing correction value) to correct errors (e.g., start/end point errors, errors in spacings between processing lines, and bow aberrations of the processing lines) occurring in the processing line due to the angular errors of the mirrors 141 to 148 formed on the outer surface of the polygon scanner 140 and stores the calculated correction value in the memory (not illustrated).

In this way, when normal processing for the target workpiece 10 is performed after the correction values (e.g., the correction angle of the total reflection mirror 120 and the laser emission timing correction value) for correcting the errors occurring in the processing line due to the errors are stored in the memory (not illustrated), the processor 170 adjusts the angle of the total reflection mirror 120 and the laser emission timing based on the correction values (e.g., the correction angle of the total reflection mirror 120 and the laser emission timing correction values) for the mirrors 141 to 148 formed on the outer surface of the polygon scanner 140, thereby preventing the problem of a defective pattern being formed on the target workpiece 10 and allowing a consistent straight line pattern to be formed (S108).

In this way, in the present embodiment, when the laser beam is emitted onto the mirrors 141 to 148 formed on each surface of the polygon scanner 140, the angle of incidence of the laser beam is adjusted by adjusting the angle of the total reflection mirror 120 in response to the error of each mirror, or the timing of the laser beam emission is adjusted so that the laser beam reflected in the mirror is corrected so as not to be distorted, thereby forming a constant straight line pattern on the target workpiece 10.

According to one aspect of the present invention, distortion of a laser beam reflected from a mirror can be corrected by adjusting an incident angle of the laser beam or the timing of emission of the laser beam in response to an error of each mirror when the laser beam is emitted onto the mirrors formed on each surface of a polygon scanner.

## Claims

1. A laser processing apparatus comprising:
a laser module (110) configured to generate a laser beam;
a mirror (120) configured to reflect the laser beam toward a polygon scanner (140); and
a processor (170) configured to measure an error in a processing line formed on a target workpiece (10) by the laser beam and, based on the error in the processing line, perform at least one of angle correction of the mirror (120) and laser emission timing correction of the laser module (110).

2. The laser processing apparatus of claim 1, wherein the mirror (120) is a total reflection mirror.

3. The laser processing apparatus of claim 1 or 2, wherein the processor (170) analyzes a plurality of processing lines formed on a surface of the target workpiece (10) photographed by a camera (160) and measures at least one of an error in a spacing between the processing lines, an error in start/end points of the processing line, and a bow aberration of the processing line.

4. The laser processing apparatus according to any one of claims 1 to 3, wherein the processor (170) is configured to:
select a processing line with a smallest bow aberration among the plurality of processing lines formed on the surface of the target workpiece (10) and set the selected processing line to a reference line; and
compare the reference line with other processing lines to measure at least one of the error in the start/end points of the processing line, the error in the spacing between the processing lines, and the bow aberration of the processing line.

5. The laser processing apparatus according to any one of claims 1 to 4, wherein the processor (170) is implemented to calculate an angular error of each mirror (120) formed in the polygon scanner (140) based on an error in start/end points of the processing line, an error in a spacing between processing lines, and a bow aberration of the processing line.

6. The laser processing apparatus according to any one of claims 3 to 5, wherein, when the error in the start/end points of the processing line is measured,
the processor (170) corrects the errors in the start/end points of each processing line through the laser emission timing correction of the laser module (110).

7. The laser processing apparatus according to any one of claims 3 to 6, wherein, when the error in the spacing between the processing lines and the bow aberration of the processing line are measured,
the processor (170) corrects the error in the spacing between the processing lines and the bow aberration of the processing line by adjusting an angle of the mirror (120).

8. The laser processing apparatus according to any one of claims 1 to 7, wherein the processor (170) calculates a correction value for correcting errors in processing lines that occur on the target workpiece (10) due to an angular error of each mirror (120) formed in the polygon scanner (140) using experimental result data or a designated mathematical equation.

9. A method of controlling a laser processing apparatus, comprising:
measuring, by a processor (170) of a laser processing apparatus, an error in a processing line formed on a target workpiece (10) by a laser beam; and
performing, by the processor, at least one of angle correction of a mirror (120) and laser emission timing correction of a laser module (110) based on the error in the processing line.

10. The method of claim 9, wherein the mirror (120) is a total reflection mirror.

11. The method of claim 9 or 10, wherein in the measuring of the error in the processing line,
the processor (170) analyzes a plurality of processing lines formed on a surface of the target workpiece (10) photographed by a camera (160) and measures at least one of an error in a spacing between the processing lines, an error in start/end points of the processing line, and a bow aberration of the processing line.

12. The method according to any one of claims 9 to 11, wherein, in the measuring of the error in the processing line,
the processor (170) is configured to:
select a processing line with a smallest bow aberration among the plurality of processing lines formed on the surface of the target workpiece (10) and set the selected processing line to a reference line; and
compare the reference line with other processing lines to measure at least one of the error in the start/end points of the processing line, the error in the spacing between the processing lines, and the bow aberration of the processing line.

13. The method according to any one of claims 9 to 12, wherein, before the performing of the at least one of the angle correction of the mirror (120) and the laser emission timing correction of the laser module (110),
the processor (170) calculates an angular error of each mirror (120) formed in a polygon scanner (140) based on an error in start/end points of the processing line, an error in a spacing between processing lines, and a bow aberration of the processing line.

14. The method according to any one of claims 11 to 13, wherein, when the errors in the start/end points of the processing line are measured,
the processor (170) corrects the errors in the start/end points of each processing line through the laser emission timing correction of the laser module (110).

15. The method according to any one of claims 1 to 14, wherein, when the error in the spacing between the processing lines and the bow aberration of the processing line are measured,
the processor (170) corrects the error in the spacing between the processing lines and the bow aberration of the processing line by adjusting an angle of the mirror (120).
